# EUROPEAN PATENT APPLICATION

(11) **EP 2 487 135 A1**
(43) Date of publication of application: **15.08.2012**
(21) Application number: 10821726.6
(22) Date of filing: 04.10.2010
(51) Int. Cl.: C01B 33/113, B65D 81/24, H01M 4/48

(54) **SiOx, AND VAPOR DEPOSITION MATERIAL FOR BARRIER FILM AND NEGATIVE ELECTRODE ACTIVE MATERIAL FOR LITHIUM-ION SECONDARY BATTERY EACH USING THE SAME**

(30) Priority: 09.10.2009 JP 2009235365
(71) Applicant: OSAKA Titanium Technologies Co., Ltd., Amagasaki-shi Hyogo 660-8533 (JP)
(72) Inventor: KANNO, Hideaki, Amagasaki-shi Hyogo 660-8533 (JP); KIZAKI, Shingo, Amagasaki-shi Hyogo 660-8533 (JP)
(74) Representative: Simons, Amanda Louise
(86) International application number: PCT/JP2010/005927
(87) International publication number: WO 2011/043049

(57) **Abstract**

Provided is SiOₓ, wherein the amount of generated H₂O gas detected in a temperature range of 200 to 800°C in a temperature-programmed desorption gas analysis is 680 ppm or less. The amount of the generated H₂O is desirably 420 ppm or less. In addition, in a graph obtained by X-ray diffraction, the peak intensity P1 at a Si peak point exhibited near 2θ = 28° and the base intensity P2 at a peak point interpolated from the gradient of average intensities in the fore and aft positions near the peak point desirably satisfy (P1-P2)/P2≤0.2. This SiOₓ is used as a vapor deposition material, whereby the generation of splashing is suppressed in forming a film, and a vapor-deposited film having excellent gas barrier properties can be formed. In addition, this SiOₓ is used as a negative electrode active material, whereby high initial efficiency of a lithium-ion secondary battery can be maintained.

## Description

### TECHNICAL FIELD

The present invention relates to SiOₓ that can be suitably used as a vapor deposition material for a barrier film and a negative electrode active material for a lithium-ion secondary battery, and a vapor deposition material for a barrier film and a negative electrode active material for a lithium-ion secondary battery each using the same.

### BACKGROUND ART

Usually, in the case where foods and the like are packaged in the food processing field, in order to prevent degradation of fats and oils, proteins, and the like, so-called gas barrier properties are demanded for the packaging materials, so that oxygen, moisture and the like do not permeate the packaging materials. Furthermore, in the field in which medical products and medicinal products are treated, a rigorously high standard to the deterioration or degradation is set with respect to the medical products and medicinal products, and the packaging materials having high gas barrier properties are demanded.

In recent years, attention is being paid to packaging materials comprising an SiO vapor-deposited film having high gas barrier properties and excellent transparency. Examples include a material obtained by forming a SiO vapor-deposited film on a polymer film. As used herein, the SiO vapor-deposited film means a silica type vapor-deposited film, and when the composition is represented by SiOₓ, the value of x is in the range of 1<x<2. When the SiO vapor-deposited film is used as a packaging barrier film, the value of x is preferably set in the range of 1.4<x<1.8. Incidentally, excellent transparency is necessary to observe packaged contents by appearance and check deterioration or degradation thereof, and can be said as an essential property, particularly for the packaging material that packages foods and the like.

The vapor deposition material which can form the SiO vapor-deposited film having high gas-barrier properties is produced by heating a mixture of Si and SiO₂ precipitating the sublimated SiO gas on a precipitation substrate, and processing the resulting precipitated SiO by pulverization, grinding or the like. However, when forming a SiO vapor-deposited film on a polymer film using this SiO vapor deposition material, splashing happens to occur. Splashing is a phenomenon in which high-temperature fine particles that are not sublimated scatter together with the sublimated SiO gas, and when the fine particles adhere to the SiO vapor-deposited film on a polymer film, pinholes and other defects are generated, and result in deteriorating gas-barrier properties.

Therefore, in order to suppress the number of generation of splashing, various improvements have been attempted in the past, for example, a SiO vapor deposition material having a low hydrogen gas content is proposed in Patent Literature 1. The said literature shows a relationship between a hydrogen gas content in a SiO vapor deposition material and the number of generation of splashing and describes that the number of generation of splashing can be significantly reduced by setting the hydrogen gas content to 50 ppm or less. However, expected effect on reducing splashing is not necessarily obtained. In addition, since it is necessary to remove hydrogen gas that is contained in silicon and silicon dioxide to be used in producing a SiO vapor deposition material, there arise problems that productivity is low, and the production cost of SiO increases.

In Patent Literature 2 and Patent Literature 3, highly active silicon oxide powder is proposed. Since being highly active enables a reaction with other elements to be efficient and easy, the highly active silicon oxide powder can be expected as a raw material for producing a silicon compound. It is described in Example of Patent Literature 3 that silicon nitride is obtained with a high reaction rate using this silicon oxide powder as a raw material. However, the improvement of physical properties thereof for utilizing as a vapor deposition material is not made, and it is considered to be difficult to obtain an effect on reducing splashing when forming a film using the silicon oxide powder described in these patent literatures. In addition, the silicon oxide powder described in these patent literatures is liable to promote surface oxidation and nitridation under an atmosphere due to its high activity, and is poor in handling characteristic.

On the other hand, in accordance with recent noticeable developments in portable electronic equipments, communication equipments and the like, development of secondary batteries with high energy density is strongly requested from the viewpoint of economic aspect and miniaturization and weight reduction of equipment, and the demand for a lithium-ion secondary battery is strongly growing in the power source market because of its enhanced life and capacity.

The lithium-ion secondary battery comprises a positive electrode, a negative electrode, and a separator impregnated with electrolyte between these opposite electrodes, and is configured such that lithium ions move back and forth between the positive electrode and the negative electrode through the electrolyte on the occasion of charging and discharging.

The negative electrode uses an active material capable of occluding and releasing lithium ions (negative electrode active material), and it is attempted to use a silicon oxide such as SiO, as the negative electrode active material. Since the silicon oxide is low (less noble) in electrode potential to lithium and has no deterioration such as collapse of crystal structure or generation of an irreversible substance, which results from the occlusion and release of lithium ions during charging and discharging, the silicon oxide can be expected, by using it as the negative electrode active material, to provide a lithium-ion secondary battery high in voltage and energy density and also excellent in cycle characteristic (maintainability of discharge capacity in repeating charging and discharging) and initial efficiency.

The initial efficiency refers to the ratio of initial discharge capacity to initial charge capacity and is one of important battery design factors. Law initial efficiency means that lithium ions implanted to a negative electrode by the initial charge is not sufficiently discharged at the initial discharge, and it is difficult to use a silicon oxide displaying lower initial efficiency as a negative electrode active material for a lithium-ion secondary battery. While a SiO vapor deposition material and silicon oxide having various properties are suggested in Patent Literatures 1 to 3 describe above, an improvement for an increase in initial efficiency has not been accomplished in any of them.

### CITATION LIST

### PATENT LITERATURE

PATENT LITERATURE 1: WO 2006/025195
PATENT LITERATURE 2: Japanese Patent No. 3951107
PATENT LITERATURE 3: Japanese Patent No. 3952118

### SUMMARY OF INVENTION

### TECHNICAL PROBLEM

An object of the present invention is to provide SiOₓ that can form a vapor-deposited film having excellent gas barrier properties, in which the generation of splashing is suppressed, and pinholes and other defects are not generated, when forming a SiO vapor-deposited film on a polymer film using a SiO vapor deposition material, and that can maintain the initial efficiency (the ratio of initial discharge capacity to initial charge capacity, i.e., discharge-to-charge ratio) at high level in a case of being used as a negative electrode active material for a lithium-ion secondary battery, and to provide a vapor deposition material for a barrier film and a negative electrode active material for a lithium-ion secondary battery each using this SiOₓ.

### SOLUTION TO PROBLEM

The present inventors studied in order to solve the above-mentioned problems and it turned out that, the more the amount of the generated H₂O gas detected in a temperature range of 200 to 800°C when performing temperature-programmed desorption gas analysis is, the more the splashing is generated when forming a SiOₓ vapor-deposited film on a polymer film, and in addition, the initial efficiency becomes lower when using SiOₓ as a negative electrode active material for a lithium-ion secondary battery.

The amount of the generated H₂O gas detected from SiOₓ in a temperature range of 200 to 800°C in temperature-programmed desorption gas analysis depends on the number of silanol groups contained in SiOₓ. A silanol group (Si-OH) is a group formed by covalent bonding between Si and a hydroxyl group. A silanol group causes a reaction of the following chemical formula (1) at 200 to 800°C, to form a siloxane bond (Si-O-Si) and also generate H₂O gas.

Si-OH + HO-Si → -Si-O-Si- + H₂O↑ (1)

The present invention is achieved based on the above-mentioned findings, and the summaries thereof lies in SiOₓ of the (1) below, a vapor deposition material for a barrier film of the (2) below, and a negative electrode active material for a lithium-ion secondary battery of the (3) below.

(1) SiOₓ, characterized in that the amount of generated H₂O gas detected in a temperature range of 200 to 800°C in a temperature-programmed desorption gas analysis is 680 ppm or less.

In the SiOₓ of (1), an embodiment in which the amount of the generated H₂O gas detected in a temperature range of 200 to 800°C in a temperature-programmed desorption gas analysis is 420 ppm or less can be adopted.

In addition, in the SiOₓ of (1), when transforming a graph of raw data obtained by X-ray diffraction into a moving average approximation curve by use of a fixed subset size of 49, the relationship between a peak intensity P1 at a Si peak point generated near 2θ = 28° on the curve and a base intensity P2 at a peak point expected from the average gradient before and after the peak point satisfies (P1-P2)/P2≤0.2, which can be deemed as a preferred mode of an embodiment.

(2) A vapor deposition material for a barrier film, which uses the SiOₓ of the (1) above.

(3) A negative electrode active material for a lithium-ion secondary battery, which uses the SiOₓ of the (1) above.

### ADVANTAGEOUS EFFECTS OF INVENTION

When the SiOₓ of the present invention is used as a vapor deposition material for a barrier film (packaging material) used in the field of food processing, medical products and medicinal products and the like, the generation of splashing can be suppressed in forming a SiOₓ vapor-deposited film, and a vapor-deposited film having excellent gas barrier properties, without pinholes and other defects, can be formed. In addition, in case of being used as a negative electrode active material for a lithium-ion secondary battery, high initial efficiency (ratio of initial discharge capacity to initial charge capacity) of the secondary battery can be maintained. The SiOₓ of the present invention is low in activity, and thus surface oxidation and/or nitridation do not develop under open air and is also excellent in handling characteristic.

In addition, using the vapor deposition material for a barrier film of the present invention permits a vapor-deposited film having excellent gas barrier properties to be formed, and using the negative electrode active material for a lithium-ion secondary battery of the present invention enables high initial efficiency of a lithium-ion secondary battery to be maintained.

### BRIEF DESCRIPTION OF DRAWING

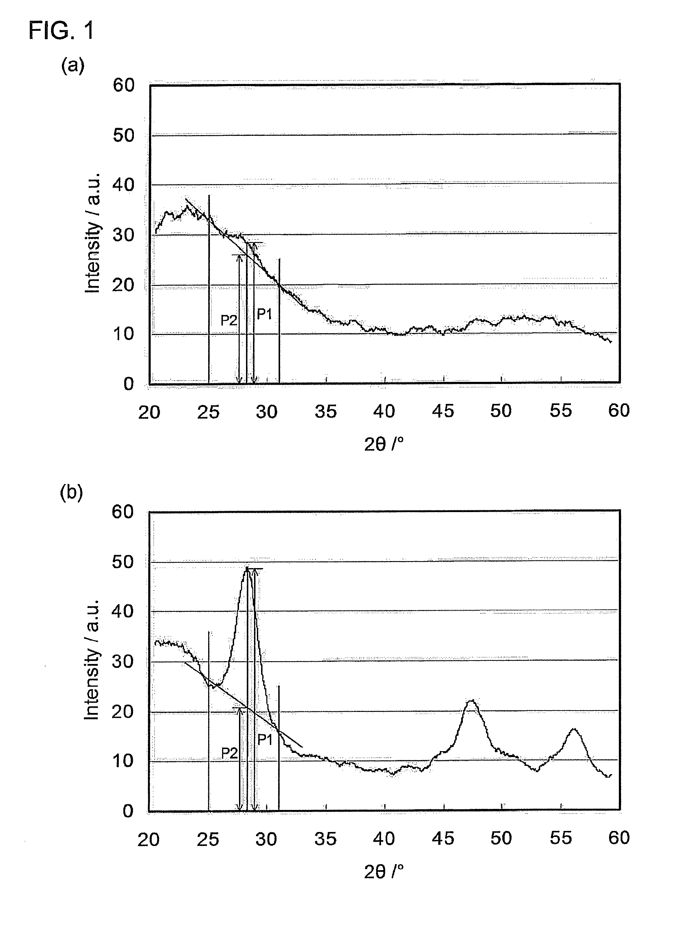

[Fig. 1] Fig. 1 is a graph of SiOₓ powder, which was obtained by X-ray diffraction, Fig. 1 (a) shows an example that satisfies (P1-P2)/P2≤0.2, and Fig. 1 (b) shows an example that satisfies (P1-P2)/P2>0.2.

### DESCRIPTION OF EMBODIMENTS

As described above, SiOₓ of the present invention is the SiOₓ being characterized in that the amount of the generated H₂O gas detected in a temperature range of 200 to 800°C in a temperature-programmed desorption gas analysis is 680 ppm or less.

In SiOₓ of the present invention, the reason for specifying the amount of the generated H₂O gas detected in a temperature range of 200 to 800°C in a temperature-programmed desorption gas analysis at 680 ppm or less is, for example, to eliminate the generation of splashing when forming a SiOₓ vapor-deposited film on a polymer film using the SiOₓ of the present invention, and to maintain high initial efficiency of the secondary battery constituted using the SiOₓ of the present invention as a negative electrode active material for a lithium-ion secondary battery, while retarding a decrease thereof. The amount of the generated H₂O gas detected in a temperature range of 200 to 800°C in a temperature-programmed desorption gas analysis is preferably 420 ppm or less from the viewpoint of further reducing the generation of splashing and maintaining further high initial efficiency of a lithium-ion secondary battery.

When the amount of the generated H₂O gas detected from SiOₓ in a temperature range of 200 to 800°C in a temperature-programmed desorption gas analysis is 680 ppm or more, splashing is generated in forming a film, and initial efficiency of a lithium-ion secondary battery decreases.

The amount of the generated H₂O gas detected from SiOₓ in a temperature range of 200 to 800°C in a temperature-programmed desorption gas analysis is measured using a temperature-programmed desorption gas analysis apparatus (TDS) by a mass fragment method. A sample is heated from room temperature at a heating rate of 0.5°C/s. The mass fragment method is a method such that a spectrum with temperatures being on the axis of abscissa and ion intensities of a specific mass number being on the axis of ordinate is obtained, and an area of this spectrum is used to perform a quantitative analysis.

In SiOₓ of the present invention, the range ofx is desirably 0.5≤x≤1.5. This is because, when the SiOₓ is used as a vapor deposition material for a barrier film, the SiOₓ wherein x is more than 1 is usually desirable, and when the SiOₓ is used as a negative electrode active material for a lithium-ion secondary battery, the SiOₓ wherein x is less than 1 is generally used.

In SiOₓ of the present invention, an embodiment that, when transforming a graph of the raw data obtained by X-ray diffraction into a moving average approximation curve by use of a fixed subset size of 49 (49 data in a subset being averaged, in succession), the relationship between the peak intensity P1 at a Si peak point exhibited near 20 = 28° on the curve and the base intensity P2 at the peak point, which is interpolated from the gradient of average intensities in the fore and aft positions near the peak point, satisfies (P1-P2)/P2≤0.2 can be adopted.

The SiOₓ is obtained by precipitating the sublimated SiOₓ on the inner periphery of the heated precipitation substrate as set forth below. Si happens to be mixed in this SiOₓ, and when this is used as a vapor deposition material, the mixed Si is evaporated and scattered, and this also causes splashing. The present inventors have found that: this mixed Si is precipitated on the precipitation substrate after thermal cracking of SiOₓ; as (P1-P2)/P2 is smaller, splashing by the precipitated Si gets fewer, so that splashing is practically sufficiently reduced when (P1-P2)/P2≤0.2 is satisfied; and the lower the temperature of the inner periphery of the precipitation substrate is, (P1-P2)/P2 becomes smaller. As used herein, the method of obtaining P1 and P2 will be described using Fig. 1.

Fig. 1 is a graph of SiOₓ powder, which was obtained by X-ray diffraction, the diagram (a) thereof shows an example that satisfies (P1-P2)/P2≤0.2, and the diagram (b) thereof shows an example that satisfies (P1-P2)/P2>0.2. Since a graph of the raw data obtained by X-ray diffraction contains many noises, the graph is transformed into a moving average approximation curve so as to decrease the effect of the noises. At this time, the subset size is fixed to 49 (49 data in a subset is averaged, in succession). Specifically, the average of a first subset of forty-nine (1st to 49th values) raw data that are compiled according as 2θ (θ: X-ray incidence angle) is in ascending order, becomes a first average value of the moving average approximation curve (corresponding to the value for the 25th 2θ from the smallest angle). Next, the average of 2nd through 50th raw data becomes a second value of the moving average approximation curve (corresponding to the value for the 26th 2θ from the smallest angle). Subsequently, the raw data are processed in the same way, whereby the raw data can be transformed into the moving average approximation curve.

Figs. 1 (a) and (b) each shows the transformed moving average approximation curve. The said graphs each shows a peak near 2θ = 28°. This is a Si peak. Any discernible peak is not observed in the fore and alt regions in the vicinity of the peak, except for the Si peak region near 28°. Thus, from intensity data in the fore and alt regions near the peak, the peak region being excluded, a base line (represented by a straight line in the figure) in the peak region, that is, the gradient of average intensities, without regards to the influence of the peak intensity, is obtained. From this, the base intensity P2 at the peak point is interpolated.

More specifically, as the fore and alt regions near the peak, except for the peak region, regions of 24 to 26° and 30 to 32° are selected, respectively. In the regions, the average intensities P3 and P4 are obtained, respectively. The average intensities P3 and P4 are regarded as the intensities at 25° and 31°, respectively, and a straight line is drawn connecting respective points. This is used as the base line. The intensity of the intersection between a perpendicular erected at the peak point 2θ and the base line is used as the base intensity P2.

The base intensity P2 at the peak point is interpolated in this way, then (P1-P2)/P2 can be calculated. (P1-P2)/P2 is 0.10 in Fig. 1 (a) and is 1.35 in Fig. 1 (b).

The SiOₓ of the present invention can be produced through the steps shown in the following (1) to (4).
(1) A mixed pelletized raw material that is obtained by blending and pelletizing Si powder and SiO₂ powder is heated to 1100 to 1350°C. In this case, as described in afore-mentioned Patent Literature 1, it is desirable to use a raw material having a low hydrogen gas content for reducing the number of generation of splashing.
In the case where SiOₓ is for use in a vapor deposition material for a barrier film, the SiOₓ wherein x is more than 1 is usually used, and when used as a negative electrode active material for a lithium-ion secondary battery, the SiOₓ wherein x is less than 1 is generally used. When SiOₓ powder is produced by pulverizing the SiOₓ film that is prepared, for example, by a binary deposition method that independently heats two types of raw materials, Si and SiO₂ with an individual heating source to deposit, the value of this x can be adjusted by adjusting each deposition rate of Si and SiO₂ when preparing a SiOₓ film.

(2) The sublimated SiOₓ is precipitated on a precipitation portion (the inner periphery of a precipitation substrate) at 500 to 600°C.
(3) The precipitation substrate on which SiOₓ is precipitated is cooled in an Ar atmosphere, and SiOₓ is collected and pulverized.
(4) The collected SiOₓ and an appropriate amount of ethanol are put into in an autoclave and then treated at a pressure of 0.1 to 1 MPa and a temperature of 80 to 150°C.

The treatment of the (4) above (hereinafter, referred to as "treatment after collection") is an important treatment for producing the SiOₓ of the present invention. The treatment after collection is performed, whereby part with a silanol group being present can be repaired in a state maintaining the original structure of SiOₓ, to form a stable siloxane bond (Si-O-Si). As a result, the SiOₓ of the present invention, wherein the amount of the generated H₂O gas detected in a temperature range of 200 to 800°C in a temperature-programmed desorption gas analysis is 680 ppm or less, can be produced.

In the treatment after collection, a treatment pressure at 0.3 to 1 MPa and a treatment temperature of 105 to 150°C are desirable. This is due to the fact that the SiOₓ of the present invention, wherein the amount of the generated H₂O gas detected in a temperature range of 200 to 800°C in a temperature-programmed desorption gas analysis is 420 ppm or less, can be produced thereby. Also, this is due to the fact that it maintains the original structure of SiOₓ and simplifies the post-treatment.

This treatment after collection can be relatively easily performed, for example, by storing the collected SiOₓ and an appropriate amount of ethanol in an autoclave and heating at a given temperature. The reason for charging ethanol into the autoclave at the same time is to gasify ethanol to adjust the pressure in the autoclave to a given pressure.

The SiOₓ of the present invention described above can suppress the generation of splashing in forming a SiOₓ vapor-deposited film, and a vapor-deposited film having excellent gas barrier properties can be formed. In addition, in case of being used as a negative electrode active material for a lithium-ion secondary battery, high initial efficiency of the secondary battery can be maintained. This SiOₓ is low in activity, thus surface oxidation and/or nitridation do not develop and is also excellent in handling characteristic.

The vapor deposition material for a barrier film of the present invention uses the SiOₓ of the present invention, and the SiOₓ vapor-deposited film formed using the SiOₓ is excellent in gas barrier properties. In addition, the negative electrode active material for a lithium-ion secondary battery of the present invention uses the SiOₓ of the present invention, and the lithium-ion secondary battery using the SiOₓ can maintain high initial efficiency.

### EXAMPLES

A mixed pelletized raw material obtained by blending Si powder and SiO₂ powder having a hydrogen gas content of 35 ppm and pelletizing was heated at 1100 to 1350°C, and the generated gaseous SiOₓ was precipitated on the inner periphery of the precipitation substrate and cooled in an Ar atmosphere until the temperature of the precipitation substrate reached to room temperature, thereafter released to open air, to collect and pulverize SiOₓ. Subsequently, the collected SiOₓ and a given amount of ethanol (special grade chemical) were put into an autoclave and subjected to treatment after collection for 5 hours, and then filtered and dried to produce SiOₓ. Table 1 shows the temperature of the inner periphery of the precipitation substrate (precipitation portion) and the pressure and temperature conditions of treatment after collection. In comparative examples shown in Table 1, the treatment after collection was not performed. The inventive examples each, shown in Table 1, is the one in which the amount of the generated H₂O gas detected in a temperature range of 200 to 800°C in a temperature-programmed desorption gas analysis satisfies the conditions specified in the present invention and comparative examples each is the one that does not satisfy the conditions.

[Table 1]

**TABLE 1**

| | Production Conditions | | | Physical Properties | | Effect | |
|---|---|---|---|---|---|---|---|
| | Temperature of Precipitation Portion (°C) | Treatment after Collection | | Amount of Generated H₂O Gas (ppm) | X-Ray Diffraction | Number of Splashing Generation (Count) | Initial Efficiency (%) |
| | | Pressure (MPa) | Temperature (°C) | | P1-P2 P2 | | |
| Inventive Example 1 | 500 | 0.3 | 100 | 680 | 0.08 | 0 to 2 | 71 |
| Inventive Example 2 | 500 | 0.5 | 125 | 420 | 0.07 | 0 to 2 | 75 |
| Inventive Example 3 | 500 | 1 | 150 | 280 | 0.09 | 0 to 2 | 75 |
| Inventive Example 4 | 900 | 1 | 150 | 290 | 1.5 | 0 to 2 | 75 |
| Comparative Example 1 | 500 | - | - | 5000 | 0.08 | 15 | 53 |
| Comparative Example 2 | 900 | - | - | 1020 | 1.5 | 8 | 55 |

The amount of the generated H₂O gas detected in a temperature range of 200 to 800°C in a temperature-programmed desorption gas analysis, the value x of SiOₓ, and Si peak intensity by X-ray diffraction for each of SiOₓ was investigated. Furthermore, the number of splashing generation when the SiOₓ was used as a vapor deposition material for a barrier film, and the initial efficiency of a secondary battery when used as a negative electrode active material for a lithium-ion secondary battery were investigated. Incidentally, for the purpose of comparison, the same investigation was performed for the SiOₓ in which the treatment after collection was not performed.

The investigation method is as described below.
- Amount of generated H₂O gas detected in a temperature range of 200 to 800°C in a temperature-programmed desorption gas analysis:
   SiOₓ was heated from room temperature at a heating rate of 0.5°C/s using a temperature-programmed desorption gas analysis apparatus, and the amount was measured by mass fragment method.
- Value x of SiOₓ:
   The amount of O (oxygen) of SiOₓ was determined by an oxygen-in-ceramic analysis apparatus (fusion method under inert gas flow), and SiOₓ was dissolved, thereafter, the amount of Si of SiOₓ was determined by ICP emission spectrochemical analysis (inductively-coupled high-frequency plasma emission spectrometry), and the value x of SiOₓ was calculated from the above two determined values.

- Si peak intensity by X-ray diffraction:
   The relationship between the incidence angle and diffraction intensity of X-ray was investigated using powder X-ray diffractometer. The SiOₓ prepared by the above method was pulverized to an average particle size of 20 µm and used as a sample. The determination conditions of X-ray diffraction shown in Table 2 were used. Moreover, the ratio of the value of P1-P2, which is obtained by subtracting the base intensity P2 from the peak intensity P1 at a Si peak point, to the base intensity P2 (intensity ratio (P1-P2)/P2) was obtained. The method of obtaining this intensity ratio is as being afore-mentiond.

[TABLE 2]

**TABLE 2**

| | |
|---|---|
| Divergence slit | 1/2° |
| Scattering slit | 1° |
| Receiving slit | 0.6 mm |
| Scan speed | 20°/min |
| Scan step | 0.02° |
| Scanning range | 20° to 60° |

### - Number of splashing generation

Using an ion plating apparatus, the number of splashing generated in a case where electron beam was emitted with an output of 300 W and an initial pressure of 4 x 10⁻⁴ Pa for 60 seconds when the sublimated SiOₓ was deposited on a precipitation substrate.

### - Initial efficiency of lithium-ion secondary battery

A lithium-ion secondary battery using SiOₓ as a negative electrode active material was prepared, and then charged and discharged with a specific electric current, to obtain an initial efficiency.

Table 1 described above collectively shows the physical properties of the resulting SiOₓ and the effect in a case where this SiOₓ is used as a vapor deposition material for a barrier film or negative electrode active material for a lithium-ion secondary battery (the number of splashing generation and the initial efficiency), together with the production conditions of SiOₓ.

As shown in the above-mentioned Table 1, the generation of splashing was hardly found in any of the SiOₓ of Inventive Examples 1 to 4 that satisfy the conditions specified in the present invention, and the initial efficiency was also good as 60% or more.

On the other hand, the generation of splashing was found in the SiOₓ of Comparative Examples 1 and 2 that were out of the conditions specified in the present invention regarding the amount of the generated H₂O gas detected in a temperature range of 200 to 800°C in a temperature-programmed desorption gas analysis and in which the treatment after collection during production is not performed, and the initial efficiency was also low.

### INDUSTRIAL APPLICABILITY

When the SiOₓ of the present invention is used as a vapor deposition material for a barrier film, the generation of splashing can be suppressed in forming a SiOₓ vapor-deposited film, and a vapor-deposited film having excellent gas barrier properties, without pinholes and other defects, can be formed. In addition, in case of being used as a negative electrode active material for a lithium-ion secondary battery, high initial efficiency of the secondary battery can be maintained. Accordingly, the SiOₓ of the present invention can be suitably utilized in various industrial fields such as food processing, medicinal product production, and further, production of a lithium-ion secondary battery.

## Claims

1. SiOₓ, **characterized in that** an amount of generated H₂O gas detected in a temperature range of 200 to 800°C in a temperature-programmed desorption gas analysis is 680 ppm or less.

2. SiOₓ, **characterized in that** an amount of generated H₂O gas detected in a temperature range of 200 to 800°C in a temperature-programmed desorption gas analysis is 420 ppm or less.

3. The SiOₓ according to claim 1 or 2, **characterized in that**, when transforming a graph of raw data obtained by X-ray diffraction into a moving average approximation curve by use of a fixed subset size of 49, a peak intensity P1 at a Si peak point exhibited near 2θ = 28° on the curve and a base intensity P2 at a peak point interpolated from the gradient of average intensities in the fore and aft positions near the peak point satisfy (P1-P2)/P2≤0.2.

4. A vapor deposition material for a barrier film, **characterized by** using the SiOₓ as defined in any one of claims 1 to 3.

5. A negative electrode active material for a secondary battery, **characterized by** using the SiOₓ as defined in any one of claims 1 to 3.
